(19) Europäisches Patentamt / European Patent Office / Office européen des brevets

(11) **EP 1 692 535 B1**

(12) **FASCICULE DE BREVET EUROPEEN**

(45) Date de publication et mention de la délivrance du brevet:
**14.11.2007 Bulletin 2007/46**

(21) Numéro de dépôt: **04805522.2**

(22) Date de dépôt: **22.11.2004**

(51) Int Cl.:
**G01S 1/00** *(2006.01)*

(86) Numéro de dépôt international:
**PCT/FR2004/002993**

(87) Numéro de publication internationale:
**WO 2005/066650 (21.07.2005 Gazette 2005/29)**

(54) **PROCEDE D'ACQUISITION DE DONNEES SATELLITAIRES**

SATELLITENDATEN-ERFASSUNGSVERFAHREN

SATELLITE DATA ACQUISITION METHOD

(84) Etats contractants désignés:
**AT BE BG CH CY CZ DE DK EE ES FI FR GB GR HU IE IS IT LI LU MC NL PL PT RO SE SI SK TR**

(30) Priorité: **01.12.2003 FR 0314175**

(43) Date de publication de la demande:
**23.08.2006 Bulletin 2006/34**

(73) Titulaire: **Alcatel Lucent**
**75008 Paris (FR)**

(72) Inventeur: **MONNERAT, Michel**
**F-31000 Toulouse (FR)**

(74) Mandataire: **Hedarchet, Stéphane**
**Alcatel Lucent**
**Intellectual Property & Standards**
**54 rue La Boétie**
**75008 Paris (FR)**

(56) Documents cités:
EP-A- 1 146 349     US-A- 4 949 268
US-A- 4 998 111     US-A- 5 874 914

**Description**

La présente invention concerne un procédé d'acquisition de données satellitaires par un dispositif mobile incluant un récepteur de radionavigation satellitaire RNSS.

Dans le domaine de la téléphonie mobile, il s'avère de plus en plus nécessaire de pouvoir localiser les téléphones mobiles.

Pour cela, il est connu d'associer un dispositif de radiotéléphonie cellulaire, du type téléphone mobile GSM (Global System for Mobile communications) par exemple, à un récepteur RNSS (Radio Navigation Satellite System) tel qu'un récepteur du type GPS (Global Positioning System), GLONASS ou GALILEO par lequel le dispositif mobile capte des émissions en provenance de satellites pour connaître sa position. De cette manière, en cas d'accident de la circulation par exemple, le dispositif mobile peut calculer et émettre sa position.

La détermination de la position du dispositif peut se faire de la manière suivante : une pluralité de satellites émet en permanence un signal daté à destination du récepteur. Le récepteur, dans le cas où il serait synchronisé sur l'horloge des satellites, pourrait alors mesurer le temps de propagation de ce signal et en déduire une distance le séparant d'un satellite particulier. A partir de trois satellites, un tel récepteur est capable d'effectuer une triangulation pour déterminer sa position. Chaque mesure de temps de propagation représente le rayon d'une sphère centrée sur un satellite particulier, le récepteur étant situé sur cette sphère. Avec deux mesures de distance, la position d'un récepteur est sur un cercle formé par l'intersection de deux sphères. Une troisième mesure simultanée réduit l'intersection à deux points, dont un est très éloigné dans l'espace et est aisément isolé.

Dans un système de positionnement par satellite utilisant des récepteurs du type RNSS, les signaux de données permettant de calculer le positionnement du récepteur proviennent de différents satellites (quatre au minimum pour déterminer quatre inconnues x, y, z et t).

Le signal GPS émis par chacun des satellites est basé sur une technique de spectre étalé. Ainsi, le signal est un signal de données binaires modulé par un signal étalé spectralement selon un procédé d'accès multiple à répartition par code CDMA (Code Division Multiple Access). Autrement dit, chaque bit du signal de données est remplacé par une séquence d'étalement propre à chaque satellite. Les données sont transmises en mode série à 50 bits/s (50bits/s soit 0.02 s/bit). Une séquence d'étalement tel qu'une séquence pseudo aléatoire de type Gold est transmise à un rythme beaucoup plus élevé : une séquence de Gold peut être considérée comme une suite de bits, parcourue avec une période d'horloge bien définie ; l'expression appelée « moment de code » ou plus fréquemment « chip » désigne un bit de la séquence et, par extension, la durée d'un tel bit. La séquence d'étalement est ainsi transmise à un rythme de 1,023 Mchips/s (un chip dure donc environ1 $\mu$s) et comporte 1023 « chips » (soit une durée de 1 ms) : il y a donc 20 répétitions de séquences par bit de données.

La modulation par le signal étalé spectralement entraîne qu'un démodulateur normal verra le signal de réception comme du bruit.

De manière générale, la fonction de corrélation $f(\tau)$ de deux signaux $f_i(t)$ et $f_j(t)$ est donnée par la relation :

$$f\left(\tau\right) = \int_{+\infty}^{-\infty} f_i(t).f_j(t-\tau).dt \text{ , où } \tau \text{ désigne un temps}$$

variable. Bien entendu, dans la pratique, l'intégration ne se fait pas de $-\infty$ à $+\infty$ mais sur une période de temps finie, en divisant l'intégrale par la durée de ladite période. On parlera de fonction d'autocorrélation lorsque les fonctions $f_i(t)$ et $f_j(t)$ sont identiques et de fonction d'intercorrélation lorsque les fonctions $f_i(t)$ et $f_j(t)$ sont distinctes.

Chaque satellite k possède son propre signal pseudo-aléatoire $c_k(t)$. Chacun de ces signaux pseudo-aléatoires possède la propriété suivante : sa fonction d'autocorrélation est nulle sauf au voisinage du décalage temporel nul où elle prend une allure triangulaire ; autrement dit, l'intégrale $\int_{+\infty}^{-\infty} c_k(t).c_k(t-\tau).dt$ est nulle lorsque $\tau$ est non nul et est maximale lorsque $\tau$ est nul.

En outre, les signaux associés chacun à un satellite différent sont choisis de sorte que leur fonction d'intercorrélation soit nulle ; autrement dit, l'intégrale $\int_{+\infty}^{-\infty} c_k(t).c_{k'}(t-\tau).dt$ est nulle quel que soit $\tau$ lorsque k et k' sont différents.

Les signaux étalés spectralement des satellites sont donc choisis de façon à être orthogonaux.

Lorsque le récepteur cherche à acquérir les données d'un satellite particulier, le récepteur corrèle le signal reçu avec une réplique de la séquence pseudo-aléatoire du satellite recherché (la séquence du satellite lui est attribuée une fois pour toute et ne change durant toute la vie du satellite).

Ainsi, le signal reçu S(t) est la somme de l'ensemble des signaux transmis par chaque satellite :

$$S(t) = \sum_{k=1}^{n} c_k(t).d_k(t) \text{ , où n est le nombre de sa-}$$

tellites, $c_k(t)$ désigne le signal étalé spectralement du satellite k et $d_k(t)$ désigne les données du satellite k.

Si on cherche à acquérir les données du satellite m, la réplique locale correspondra au signal $c_m(t)$. Ainsi, après corrélation et en supposant que les signaux d'étalement sont parfaitement orthogonaux, on élimine toutes les données des satellites non recherchés (les fonctions d'intercorrélation sont nulles) pour retrouver uniquement les données du satellite m. La corrélation est possible car la durée d'une séquence d'étalement est vingt fois plus petite que la durée d'un bit de données.

La phase d'acquisition du signal consiste donc à calculer la corrélation du signal reçu avec la réplique locale du code satellite recherché et ce, sur un domaine temporel équivalent à la périodicité du code soit 1 ms, avec une profondeur (borne de l'intégrale) dépendant de la performance de détection que l'on veut atteindre. Le récepteur retarde le début de cette réplique jusqu'à obtenir un pic de corrélation d'allure triangulaire. La valeur de ce retard est ainsi le temps mis par le signal pour se propager du satellite jusqu'à l'utilisateur. Ce genre de mesure demande une immense précision (meilleure que 100 nanosecondes). Le temps mis par le signal pour effectuer un tel trajet est de l'ordre de 100 millisecondes. Toutefois, comme l'horloge du récepteur GPS n'est jamais totalement synchronisée sur celle des satellites, le récepteur va donc devoir constamment ajuster son horloge par approximations successives afin de parvenir à la corrélation maximale des deux signaux. L'acquisition du signal nécessite donc un balayage en temps très important par le récepteur.

En outre, le signal émis par chaque satellite est transmis à une fréquence connue et égale à 1575,42 MHz. L'effet Doppler du satellite auquel se superpose une incertitude de l'horloge locale du récepteur entraîne une incertitude approximative de +/- 5 kHz sur le signal reçu par le récepteur GPS. Or le signal généré localement par le récepteur doit avoir la même fréquence que le signal émis par le satellite pour obtenir une bonne corrélation. Ainsi, le récepteur, outre le balayage temporel, doit effectuer un balayage fréquentiel afin de déterminer le temps mis par le signal pour se propager du satellite jusqu'à l'utilisateur. US 4 998 111 décrit un récepteur GPS dans lequel les répliques locales sont corrigées par compensation de l'effet Doppler.

Les balayages en temps et en fréquence évoqués ci-dessus impliquent une puissance de calcul et un temps de traitement de données très importants pour le récepteur.

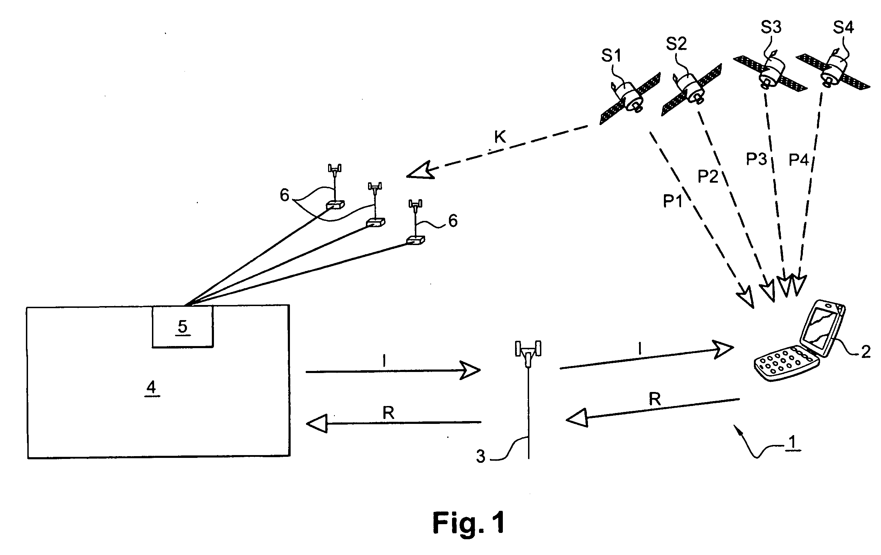

Une solution consiste à utiliser un serveur d'assistance au récepteur GPS du dispositif mobile de manière à augmenter sa sensibilité en diminuant la surface temps-fréquence à balayer. Un tel serveur est décrit dans le document « Indoor GPS Technology » (F. van Diggelen et al., CTIA Wireless-Agenda, Dallas, Mai 2001). Cette technologie est appelée A-GPS (Assisted GPS). La figure 1 représente un système 1 de télécommunication utilisant un tel serveur d'assistance 5. Un dispositif mobile 2 tel qu'un téléphone portable fonctionnant sur un réseau téléphonique 4 du type GSM et comportant un récepteur GPS cherche à calculer sa position à partir de signaux P1 à P4 émis par au moins un des satellites S1 à S4. Pour cela, le dispositif 2 envoie une requête R sous la forme d'un signal radio sur le réseau téléphonique 4. Cette requête R transité via une station radio de base 3 du type BTS (Base Transceiver Station) associée à la cellule dans laquelle se trouve le dispositif mobile 2. La requête R est traitée par le serveur 5 qui reçoit en temps réel des informations satellitaires via des stations radio 6 fixes et équipées de récepteurs GPS recevant des informations K. En réponse à la requête R, le serveur 5 envoie des informations I vers le dispositif mobile 2, lesdites informations transitant par la station BTS 3. Ces informations contiennent par exemple les éphémérides des satellites S1 à S4. Grâce à ces informations, le dispositif mobile 2 peut déterminer l'effet Doppler des satellites et réduire considérablement son balayage en fréquence. Notons que deux types de technologie A-GPS existent : une première technologie A-GPS est appelée MS-based (Mobile Station based) et une deuxième technologie est appelée MS-assisted (Mobile Station assisted). Dans le cas de la technologie MS-based, le calcul de la position du dispositif mobile 2 est réalisé par le dispositif mobile lui-même. Dans le cas de la technologie MS-assisted, le calcul de la position du dispositif mobile 2 est réalisé par le serveur 5.

Toutefois, la mise en oeuvre d'une telle solution présente encore certaines difficultés. En effet, l'un des inconvénients posé par cette solution réside dans l'acquisition des données (Détermination du temps de propagation du signal couramment appelé acquisition du signal de navigation) qui est réalisée successivement et indépendamment pour chaque satellite ; une telle acquisition entraîne ainsi un temps de traitement de données très long.

La présente invention vise à fournir un procédé plus rapide d'acquisition de données satellitaires par un dispositif mobile incluant un récepteur de radionavigation satellitaire RNSS.

La présente invention propose à cet effet un procédé d'acquisition de données satellitaires qui est défini par la revendication 1.

Grâce à l'invention, la corrélation est réalisée entre le signal reçu des satellites et la somme des répliques locales de l'ensemble des satellites supposées présentes dans le signal reçu. De cette manière, une seule fonction de corrélation est déterminée en remplacement d'une pluralité de fonctions de corrélation successives déterminées indépendamment pour chaque réplique locale. L'acquisition des données est ainsi beaucoup plus rapide dans la mesure où on remplace une pluralité de calculs de fonction de corrélation par un seul calcul. Il suffit ensuite d'associer chacun des pics de corrélation à un satellite particulier. Cette solution n'est possible que par l'utilisation d'une correction fréquentielle de l'effet Doppler de chaque satellite de façon à obtenir une fonction de corrélation faisant ressortir correctement les pics de corrélation, chaque pic de corrélation étant associé à un satellite.

Avantageusement, ledit procédé comprend une identification de chacun des satellites associés à chacun des pics de corrélation mis en évidence par ladite fonction de corrélation.

De manière particulièrement avantageuse, l'identification d'au moins un satellite comprend les étapes suivantes :

- identification du temps de synchronisation associé à un pic de corrélation,
- détermination d'une pluralité de corrélations calculées pour ledit temps de synchronisation entre chacune desdites répliques corrigées et ledit signal de données satellitaires,
- identification du satellite associé au dit pic de corrélation en fonction desdites corrélations.

Avantageusement, ledit pic est le pic principal de ladite fonction de corrélation en fonction du temps.

Selon un premier mode de réalisation, après qu'au moins un satellite ait été identifié, chacun des satellites restants est identifié selon les étapes suivantes :

- utilisation de données d'assistance reçues d'un serveur d'assistance vers ledit dispositif mobile, lesdites données d'assistance comportant les éphémérides desdits satellites et l'identifiant de la cellule dans laquelle se trouve ledit dispositif mobile,
- détermination de la différence de temps de propagation d'un signal entre d'une part, ledit satellite déjà identifié et ledit dispositif mobile et d'autre part, chacun des satellites à identifier et ledit dispositif mobile.

Selon un deuxième mode de réalisation, chacun desdits satellites est identifié suivant les étapes suivantes :

- identification du temps de synchronisation associé à un pic de corrélation,
- détermination d'une pluralité de corrélations calculées pour ledit temps de synchronisation entre chacune desdites répliques corrigées et ledit signal de données satellitaires,
- identification du satellite associé au dit pic de corrélation en fonction desdites corrélations.

Avantageusement, la fonction de corrélation en fonction du temps est déterminée suivant les étapes suivantes :

- détermination de la transformée de Fourier de chacune desdites répliques corrigées,
- sommation de chacune desdites transformées de Fourier de chacune desdites répliques corrigées,
- détermination de la transformée de Fourier dudit signal de données satellitaires,
- multiplication de la somme de chacune desdites transformées de Fourier par la transformée de Fourier dudit signal de données satellitaires,
- détermination de la transformée de Fourier inverse du produit obtenu par l'étape précédente.

De manière avantageuse, ladite correction fréquentielle de chacune desdites répliques locales par compensation de l'effet Doppler de chacun desdits satellites est obtenue par l'envoi de données d'assistance d'un serveur d'assistance vers ledit dispositif mobile.

La présente invention a également pour objet un récepteur de navigation satellitaire RNSS, qui est défini par la revendication 7, pour la mise en oeuvre du procédé selon l'invention.

La présente invention a enfin pour objet un dispostif mobile incorporant un récepteur selon l'invention.

D'autres caractéristiques et avantages de la présente invention apparaîtront dans la description suivante d'un mode de réalisation de l'invention donné à titre illustratif et nullement limitatif.

Dans les figures suivantes :

- La figure 1 représente un système de télécommunication selon l'état de la technique,
- La figure 2 représente un récepteur mettant en oeuvre le procédé d'acquisition selon l'invention,
- La figure 3 représente un graphe de corrélation illustrant le fonctionnement du procédé d'acquisition selon l'invention.

La figure 1 a déjà été décrite en relation avec l'état de la technique.

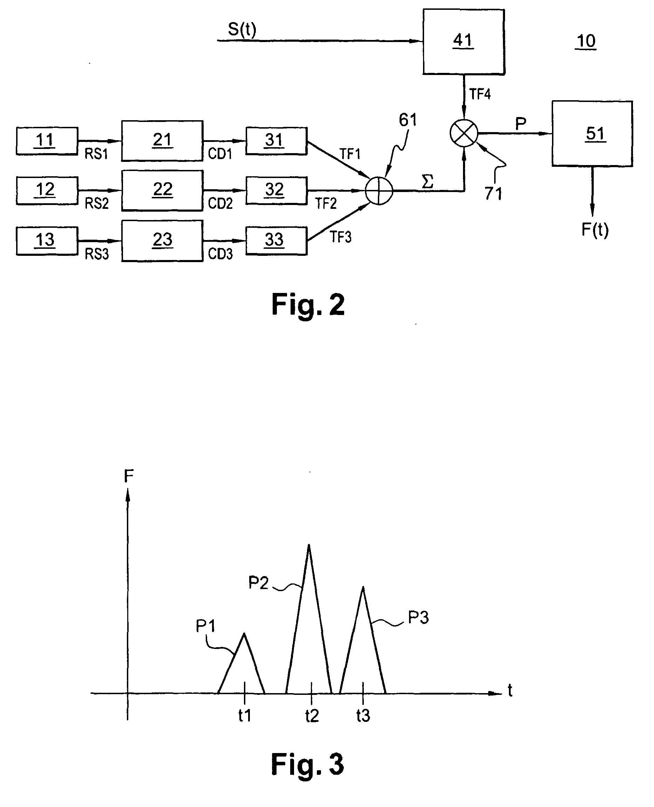

La figure 2 représente un récepteur GPS 10 intégré dans un dispositif mobile non représenté tel qu'un téléphone portable fonctionnant sur un réseau téléphonique du type GSM. Ce récepteur 10 reçoit un signal S (t) qui est la somme de l'ensemble des signaux transmis par chaque satellite : $S(t) = \sum_{k=1}^{n} c_k(t).d_k(t)$, où n est le nombre de satellites, $c_k(t)$ désigne le signal étalé spectralement du satellite k et $d_k(t)$ désigne les données du satellite k. Nous prendrons ici n=3 satellites pour illustrer l'invention sans surcharger la figure sachant qu'il est normalement nécessaire de disposer d'au moins quatre satellites.

Le récepteur 10 comporte :

- des premiers, deuxièmes, troisièmes et quatrièmes moyens de calcul de transformée de Fourier respectivement 41, 31, 32 et 33,
- des premiers, deuxièmes et troisièmes moyens de génération de répliques locales respectivement 11, 12 et 13,
- des premiers, deuxièmes et troisièmes moyens de correction fréquentielle respectivement 21, 22 et 23,
- un additionneur 61,
- un multiplieur 71,
- des moyens de calcul de transformée de Fourier inverse 51.

Les premiers, deuxièmes et troisièmes moyens de génération de répliques locales 11, 12 et 13 génèrent respectivement les répliques locales RS1, RS2 et RS3 des signaux étalés spectralement C1, C2 et C3 caractéristiques des trois satellites.

Le dispositif mobile dans lequel est intégré le récepteur 10 envoie une requête sous la forme d'un signal radio sur le réseau téléphonique. Cette requête transite via une station radio de base du type BTS (Base Transceiver Station) associée à la cellule dans laquelle se trouve le dispositif mobile. La requête est traitée par un serveur d'assistance qui reçoit en temps réel des informations satellitaires via des stations radio fixes et équipées de récepteurs GPS recevant des informations. En réponse à la requête, le serveur d'assistance envoie des informations vers le dispositif mobile. Ces informations contiennent notamment les éphémérides des trois satellites, l'identifiant de la cellule dans laquelle se trouve le dispositif mobile ainsi que l'heure GPS des trois satellites. Grâce à ces informations, les premiers, deuxièmes et troisièmes moyens de correction fréquentielle respectivement 21, 22 et 23 peuvent déterminer l'effet Doppler des satellites et réduire considérablement le balayage en fréquence en corrigeant la fréquence des répliques locales RS1, RS2 et RS3 pour tenir compte de l'effet Doppler de chaque satellite. On obtient ainsi trois répliques corrigées CD1, CD2 et CD3.

Les deuxièmes, troisièmes et quatrièmes moyens de calcul de transformée de Fourier 31, 32 et 33 calculent respectivement les transformées de Fourier TF1, TF2 et TF3 des répliques corrigées CD1, CD2 et CD3.

De même, les premiers moyens de calcul de transformée de Fourier 41 calcule la transformée de Fourier TF4 du signal reçu S(t).

L'additionneur 61 effectue la somme Σ des trois transformées de Fourier TF1, TF2 et TF3 des répliques corrigées CD1, CD2 et CD3.

Le multiplieur 71 effectue le produit P de la transformée de Fourier TF4 par la somme Σ.

Les moyens de calcul de transformée de Fourier inverse 51 détermine la transformée de Fourier inverse F(t) du produit P.

Le signal F(t) correspond à la fonction de corrélation en fonction du temps entre la somme de chacune des répliques corrigées CD1, CD2 et CD3 et le signal de données satellitaires S(t).

La figure 3 représente un graphe de corrélation permettant d'illustrer le procédé de l'invention.

Ce graphe 1 comporte une courbe représentant la fonction de corrélation F en fonction d'une variable de temps t, entre la somme de chacune des répliques corrigées CD1, CD2 et CD3 et le signal de données satellitaires S(t).

Cette courbe présente trois pics P1, P2 et P3 centrés respectivement sur les temps t1, t2 et t3 correspondant aux instants de synchronisation des satellites avec le récepteur GPS 10

La correction de l'effet Doppler de chaque satellite par les premiers, deuxièmes et troisièmes moyens de correction fréquentielle respectivement 21, 22 et 23 permet de bien faire ressortir chaque pic de corrélation associé à un satellite particulier.

Il reste alors à associer chacun des pics P1, P2 et P3 à un des satellites.

Une solution pour réaliser l'identification des pics consiste à déterminer dans un premier temps le pic de niveau le plus élevé, en l'espèce le pic P2 centré sur t2. Ce temps t2 correspond à l'instant de synchronisation du satellite à identifier avec le récepteur GPS 10.

Le calcul de la corrélation de chacune des répliques corrigées CD1, CD2 et CD3 avec S(t) uniquement pour le temps t2 permet alors de déterminer le satellite associé au pic P2, la valeur de corrélation la plus élevée correspondant au satellite recherché.

Ainsi, seulement trois corrélations en un point temporel t2 sont nécessaires pour déterminer le satellite associé au pic P2.

Cette opération peut être répétée pour les autres pics P1 et P3.

Toutefois, l'identification des satellites associés à P1 et P3 peut également être réalisée comme suit à partir de l'identification de P2.

L'identification du satellite associé à P2 permet d'obtenir l'heure GPS.

Les données d'assistance envoyées par le serveur d'assistance contiennent les éphémérides des trois satellites et l'identifiant de la cellule dans laquelle se trouve le dispositif mobile.

Dès lors, à partir des éphémérides et de l'heure GPS, on peut déterminer la position des trois satellites.

De même, l'identifiant de la cellule donne un ordre de grandeur de la position du dispositif mobile.

Grâce à la position des satellites et du dispositif mobile, on en déduit les temps T1, T2 et T3 nécessaires à un signal pour parcourir la distance séparant chacun des satellites du dispositif mobile.

Soit T2 le temps nécessaire à un signal de données pour parcourir la distance séparant le satellite déjà identifié du dispositif mobile.

En comparant les valeurs absolues des différences de temps T2-T1 et T2-T3 avec les valeurs absolues des différences t2-t1 et t2-t3, on identifie les deux satellites restants dont les pics sont centrés sur t1 et t3.

Bien entendu, l'invention n'est pas limitée au mode de réalisation qui vient d'être décrit.

Ainsi, la fonction de corrélation F(t) a été déterminée en utilisant des transformées de Fourier mais on peut également envisager d'utiliser d'autres méthodes, notamment en appliquant directement la définition de la fonction de corrélation $F(\tau)$ de deux signaux $f_i(t)$ et $f_j(t)$ donnée par la relation :

$$F(\tau) = \int_{+\infty}^{-\infty} f_i(t).f_j(t - \tau).dt \; .$$

De plus, la correction de l'effet Doppler n'implique pas nécessairement de faire une requête systématique de données d'assistance ; on peut également envisager de garder en mémoire l'effet Doppler dans le récepteur GPS et de l'utiliser plusieurs fois sans le remettre à jour.

Notons également que la sommation peut se faire sur l'ensemble des répliques supposées présentes dans le signal reçu ou sur seulement un sous-groupe d'au moins deux répliques parmi l'ensemble des répliques.

**Revendications**

1. Procédé d'acquisition de données satellitaires par un dispositif mobile incluant un récepteur (10) de radionavigation satellitaire RNSS comportant les étapes suivantes :

   - réception par ledit récepteur d'un signal (S(t)) émis par une pluralité de satellites, ledit signal correspondant à une somme de signaux envoyés chacun par un satellite et modulés chacun par un signal étalé spectralement et caractéristique dudit satellite,
   - génération d'une pluralité de répliques locales (RS1, RS2, RS3) générées par ledit récepteur (10), chacune desdites répliques étant la réplique d'un signal étalé spectralement et caractéristique d'un satellite,
   - correction fréquentielle de chacune desdites répliques locales par compensation de l'effet Doppler de chacun desdits satellites,
   - sommation de ladite pluralité de répliques corrigées (CD1, CD2 CD3),
   - détermination de la fonction (F(t)) de corrélation en fonction du temps entre la somme de ladite pluralité de répliques corrigées et ledit signal (S(t)) de données satellitaires,

   identification de chacun des satellites associés à chacun des pics (P1, P2, P3) de corrélation mis en évidence par ladite fonction (F(t)) de corrélation, **caractérisé en ce que** après qu'au moins un satellite ait été identifié, chacun des satellites restants est identifié selon les étapes suivantes :

   - utilisation de données d'assistance reçues d'un serveur d'assistance vers ledit dispositif mobile, lesdites données d'assistance comportant les éphémérides desdits satellites et l'identifiant de la cellule dans laquelle se trouve ledit dispositif mobile,
   - détermination de la différence de temps de propagation d'un signal entre d'une part, ledit satellite déjà identifié et ledit dispositif mobile et d'autre part, chacun des satellites à identifier et ledit dispositif mobile,
   - comparaison des valeurs absolues des différences de temps déterminées avec les différences de temps par rapport aux positions des pics.

2. Procédé selon la revendication 1 **caractérisé en ce que** l'identification d'au moins un satellite comprend les étapes suivantes :

   - identification du temps de synchronisation associé à un pic de corrélation,
   - détermination d'une pluralité de corrélations calculées pour ledit temps de synchronisation entre chacune desdites répliques corrigées et ledit signal de données satellitaires,
   - identification du satellite associé au dit pic de corrélation en fonction desdites corrélations.

3. Procédé selon la revendication 2 **caractérisé en ce que** ledit pic est le pic principal de ladite fonction de corrélation en fonction du temps.

4. Procédé selon la revendication 1 **caractérisé en ce que** chacun desdits satellites est identifié suivant les étapes suivantes :

   - identification du temps de synchronisation associé à un pic de corrélation,
   - détermination d'une pluralité de corrélations calculées pour ledit temps de synchronisation entre chacune desdites répliques corrigées et ledit signal de données satellitaires,
   - identification du satellite associé au dit pic de corrélation en fonction desdites corrélations.

5. Procédé selon l'une des revendications précédentes **caractérisé en ce que** la fonction (F(t)) de corrélation en fonction du temps est déterminée suivant les étapes suivantes :

   - détermination de la transformée de Fourier (TF1, TF2, TF3) de chacune desdites répliques corrigées (CD1, CD2, CD3),
   - sommation (Σ) de chacune desdites transformées de Fourier (TF1, TF2, TF3) de chacune desdites répliques corrigées,
   - détermination de la transformée de Fourier (TF4) dudit signal (S(t)) de données satellitaires,
   - multiplication de la somme (Σ) de chacune desdites transformées de Fourier par la transformée de Fourier (TF4) dudit signal de données satellitaires,
   - détermination de la transformée de Fourier inverse du produit (P) obtenu par l'étape précédente.

6. Procédé selon l'une des revendications précédentes **caractérisé en ce que** ladite correction fréquentielle de chacune desdites répliques locales par compensation de l'effet Doppler de chacun desdits satellites est obtenue par l'envoi de données d'assistance d'un serveur d'assistance vers ledit dispositif mobile.

**7.** Récepteur (10) de navigation satellitaire RNSS pour la mise en oeuvre du procédé selon l'une quelconque des revendications précédentes, ledit récepteur étant adapté pour recevoir un signal (S(t)) émis par une pluralité de satellites, ledit signal correspondant à une somme de signaux envoyés chacun par un satellite et modulés chacun par un signal étalé spectralement et caractéristique dudit satellite, ledit récepteur comportant :

- des moyens (11, 12, 13) de génération d'une pluralité de répliques locales, chacune desdites répliques étant la réplique d'un signal étalé spectralement et caractéristique d'un satellite,
- des moyens de correction fréquentielle (21, 22, 23) de chacune desdites répliques locales par compensation de l'effet Doppler de chacun desdits satellites,

ledit récepteur (10) étant **caractérisé en ce qu'**il comporte en outre :

- un additionneur adapté pour sommer chacune desdites répliques corrigées,
- des moyens de calcul de la fonction de corrélation en fonction du temps entre la somme de chacune desdites répliques corrigées avec ledit signal de données satellitaires
- des moyens d'identification de chacun des satellites associés à chacun des pics (P1, P2, P3) de corrélation mis en évidence par ladite fonction (F(t)) de corrélation,

**caractérisé en ce que** après qu'au moins un satellite ait été identifié, chacun des satellites restants est identifié par :

- des moyens de réception de données d'assistance reçues d'un serveur d'assistance, lesdites données d'assistance comportant les éphémérides desdits satellites et l'identifiant de la cellule dans laquelle se trouve ledit récepteur,
- des moyens de détermination de la différence de temps de propagation d'un signal entre d'une part, ledit satellite déjà identifié et ledit récepteur et d'autre part, chacun des satellites à identifier et ledit récepteur,
- des moyens de comparaison des valeurs absolues des différences de temps déterminées avec les différences de temps par rapport aux positions des pics.

**8.** Dispositif mobile incorporant un récepteur de navigation satellitaire RNSS selon la revendication précédente.

**Claims**

**1.** Method of acquisition of satellite data by a mobile device including an RNSS satellite radio navigation receiver (10), said method including the following steps:

- said receiver receiving a signal (S(t)) transmitted by a plurality of satellites and corresponding to a sum of signals each transmitted by a satellite and each modulated by a spread spectrum signal characteristic of said satellite,
- staid receiver (10) generating a plurality of local duplicates (RS1, RS2, RS3) each of which is the duplicate of a spread spectrum signal characteristic of a satellite,
- correcting the frequency of each of said local duplicates by compensating the Doppler effect of each of said satellites,
- summing said plurality of corrected duplicates (CD1, CD2, CD3), and
- determining the correlation function (F(t)) as a function of time between the sum of said plurality of corrected duplicates and said satellite data signal (S(t)),

identifying each of the satellites associated with each of the correlation peaks (P1, P2, P3) revealed by said correlation function (F(t)),
**characterised in that** after at least one satellite has been identified, each of the remaining satellites is identified by the following steps:

- using assistance data sent to said mobile device from an assistance server, said assistance data including the ephemerides of said satellites and the identifier of the cell in which said mobile device is located,
- determining the propagation time difference of a signal between said satellite already identified and said mobile terminal, on the one hand, and each of the satellites to be identified and said mobile device, on the other hand, and
- comparison of the absolute values of the time differences determined with the time differences relating to the positions of the peaks.

**2.** Method according to claim 1, **characterised in that** the identification of at least one satellite includes the following steps:

- identifying the synchronisation time associated with a correlation peak,
- determining a plurality of correlations calculated for said synchronization time between each of said corrected duplicates and said satellite data signal, and
- identifying the satellite associated with said correlation peak as a function of said correlations.

3. Method according to claim 2, **characterised in that** said peak is the main peak of said correlation function as a function of time.

4. Method according to claim 1, **characterised in that** each of said satellites is identified by the following steps:

- identifying the synchronisation time associated with a correlation peak,
- determining a plurality of correlations calculated for said synchronisation time between each of said corrected duplicates and said satellite data signal, and
- identifying the satellite associated with said correlation peak as a function of said correlations.

5. Method according to any one of the preceding claims, **characterised in that** the correlation function (F(t)) as a function of time is determined by the following steps:

- determining the Fourier transform (TF1, TF2, TF3) of each of said corrected duplicates (CD1, CD2, CD3),
- summing ($\Sigma$) each of said Fourier transforms (TF1, TF2, TF3) of each of said corrected duplicates,
- determining the Fourier transform (TF4) of said satellite data signal (S(t)),
- multiplying each sum ($\Sigma$) of each of said Fourier transforms by the Fourier transform (TF4) of said satellite data signal, and
- determining the inverse Fourier transform of the product (P) obtained by the preceding step.

6. Method according to any one of the preceding claims, **characterised in that** said frequency correction of each of said local replicas by compensation of the Doppler effect of each of said satellites is obtained by the sending of assistance data from an assistance server to said mobile device.

7. RNSS satellite navigation receiver (10) for implementing the method according to any one of the preceding claims, said receiver being adapted to receive a signal (S(t)) transmitted by plurality of satellites and corresponding to a sum of signals each transmitted by a satellite and each modulated by a spread spectrum signal characteristic of said satellite, and said receiver including:

- means (11, 12, 13) for generating a plurality of local duplicates each of which is the duplicate of a spread spectrum signal characteristic of a satellite,
- means for correcting the frequency (21, 22, 23) of each of said local duplicates by compensating the Doppler effect of each of said satellites,

said receiver (10) being **characterised in that** it further comprises:

- an adder adapted to sum each of said corrected duplicates,
- means for calculating the correlation function as a function of time between each sum of said corrected duplicates and said satellite data signal,
- means for identifying each of the satellites associated with each of the correlation peaks (P1, P2, P3) revealed by said correlation function (F (t)),

**characterised in that** after at least one satellite has been identified, each of the remaining satellites is identified by:

- means for receiving assistance data from an assistance server, said assistance data including the ephemerides of said satellites and the identifier of the cell in which said receiver is located,
- means for determining the propagation time difference of a signal between said satellite already identified and said receiver, on the one hand, and each of the satellites to be identified and said receiver, on the other hand, and
- means for comparing the absolute values of the time differences determined with the time differences bating to the positions of the peaks.

8. Mobile device incorporating an RNSS satellite navigation receiver according to the preceding claim.

**Patentansprüche**

1. Verfahren zur Erfassung von Satellitendaten durch eine mobile Vorrichtung, die einen Satelliten-Funknavigationsempfänger (10) RNSS einschließt, mit den folgenden Schritten;:

- durch diesen Empfänger Empfangen eines von einer Vielzahl von Satelliten gesendeten Signals (S(t)), wobei dieses Signal einer Summe von Signalen entspricht, die jeweils von einem Satelliten gesendet werden und jeweils von einem spektral gespreizten und für diesen Satelliten charakteristischen Signal moduliert werden,
- Generierung einer Vielzahl von lokalen Repliken (RS1, RS2, RS3), die von diesem Empfänger (10) generiert werden, wobei jede dieser Repliken, die Replik eines spektral gespreizten und für einen Satelliten charakteristischen Signals ist,
- Frequenzkorrektur jeder dieser lokalen Repliken durch Kompensation des Doppler-Effekts jedes dieser Satelliten,
- Summation dieser Vielzahl von korrigierten Repliken (CD1, CD2, CD3),
- Bestimmung der Korrelationsfunktion (F(t)) in Abhängigkeit von der Zeit zwischen der Summe dieser Vielzahl von korrigierten Repliken und diesem Satellitendatensignal (S(t)),

Identifikation jeweils der Satelliten, die jeweils mit den Korrelationspeaks (P1, P2, P3) verknüpft sind, die durch diese Korrelationsfunktion F(t)) gezeigt werden,
**dadurch gekennzeichnet, dass** nachdem mindestens ein Satellit identifiziert wurde, jeder der restlichen Satelliten gemäß den folgenden Schritten identifiziert wird:

- Nutzung von Unterstützungsdaten, die von einem Unterstützungsserver an diese mobile Vorrichtung empfangen wurden, wobei diese Unterstützungsdaten die Ephemeridendaten dieser Satelliten einschließen und die Kennung der Zelle, in der sich diese mobile Vorrichtung befindet.
- Bestimmung der Differenz in Sachen Ausbreitungsgeschwindigkeit eines Signals zwischen zum einen diesem bereits identifizierten Satelliten und dieser mobilen Vorrichtung und zum anderen jedem der zu identifizierenden Satelliten und dieser mobilen Vorrichtung,
- Vergleich der absoluten Werte der ermittelten Zeitunterschiede mit den Zeitunterschieden bezogen auf die Positionen der Peaks.

2. Verfahren gemäß Anspruch 1, **dadurch gekennzeichnet, dass** die Identifikation von mindestens einem Satelliten die folgenden Schritte einschließt:

- Identifikation der Synchronisationszeit, die mit einem Korrelationspeak verknüpft ist,
- Bestimmung einer Vielzahl von Korrelationen, welche für diese Synchronisationszeit zwischen jeder dieser korrigierten Repliken und diesem Satellitendatensignal berechnet werden.
- Identifikation des Satelliten, der mit diesem Korrelationspeak verknüpft ist, in Abhängigkeit von diesen Korrelationen.

3. Verfahren gemäß Anspruch 2, **dadurch gekennzeichnet, dass** dieser Peak der Hauptpeak dieser Korrelationsfunktion in Abhängigkeit von der Zeit ist.

4. Verfahren gemäß Anspruch 1, **dadurch gekennzeichnet, dass** jeder dieser Satelliten gemäß den folgenden Schritten identifiziert wird:

- Identifikation der Synchronisationszeit, die mit einem Korrelationspeak verknüpft ist,
- Bestimmung einer Vielzahl von Korrelationen, welche für diese Synchronisationszeit zwischen jeder dieser korrigierten Repliken und diesem Satelligendatensignal berechnet werden,
- Identifikation des Satelliten, der mit diesem Korrelationspeak verknüpft ist, in Abhängigkeit von diesen Korrelationen.

5. Verfahren gemäß einem der vorstehenden Ansprüche, **dadurch gekennzeichnet, dass** die Korrelationsfunktion (F(t)) in Abhängigkeit von der Zeit gemäß den folgenden Schritten bestimmt wird:

- Bestimmung der Fourier-Transformierten (TF1, TF2, TF3) jeder dieser korrigierten Repliken (CD1, CD2, CD3),
- Summation (Σ) jeder dieser Fourier-Transformierten (TF1, TF2, TF3) jeder dieser korrigierten Repliken,
- Bestimmung der Fourier-Transformierten (TF4) dieses Satellitendatensignals (S(t)),
- Multiplikation der Summe (Σ) jeder dieser Fourier-Transformierten mit der Fourier-Transformierten (TF4) dieses Satellitendatensignals,
- Bestimmung der inversen Fourier-Transformierten des Produkts (P), das man durch den vorangehenden Schritt erhalten hat.

6. Verfahren gemäß einem der vorstehenden Ansprüche **dadurch gekennzeichnet, dass** diese Frequenzkorrektur jeder dieser lokalen Replikon durch Kompensation des Doppler-Effekts jedes dieser Satelliten ersielt wird durch das Senden von Unterstützungsdaten von einem Unterstützungsserver an diese mobile Vorrichtung.

7. Satellitennavigationsempfänger RNSS (10) für die Durchführung des Verfahrens gemäß einem der vorstehenden Ansprüche, wobei dieser Empfänger geeignet ist für das Empfangen eines Signals (S(t)), das von einer Vielzahl von Satelliten gesendet wird, wobei dieses Signal einer Summe von Signalen entspricht, die jeweils von einem Satelliten gesendet werden und jeweils von einem spektral gespreizten und für diesen Satelliten charakteristischen Signal moduliert werden, wobei dieser Empfänger folgendes einschließt:

- Mittel (11, 12, 13) zur Generierung einer Vielzahl von lokalen Repliken, wobei jede dieser Repliken die Replik eines spektral gespreizten und für einen Satelliten charakteristischen Signals ist,

- Mittel zur Frequenzkorrektur (21, 22, 23) jeder dieser lokalen Repliken durch Kompensation des Doppler-Effekts jedes dieser Satelliten,

wobei dieser Empfänger (10) **dadurch gekennzeichnet ist, dass** er außerdem folgendes einschließt:

- einen Addierer, der für die Summierung jeder dieser korrigierten Repliken geeignet ist,
- Mittel zur Berechnung der Korrelationsfunktion in Abhängigkeit von der Zeit zwischen der Summe jeder dieser korrigierten Repliken mit diesem Satellitendatensignal
- Mittel zur Identifikation jeweils der Satelliten, die jeweils mit den Korrelationspeaks (P1, P2, P3) verknüpft sind, die durch diese Korrelationsfunktion (F(t)) gezeigt werden,

**dadurch gekennzeichnet, dass** nachdem mindestens ein Satellit identifiziert wurde, jeder der restlichen Satelliten identifiziert wird durch:

- Mittel zum Empfangen von Unterstützungsdaten, die von einem Unterstützungsserver empfangen wurden, wobei diese Unterstützungsdaten die Ephemeridendaten dieser Satelliten einschließen und die Kennung der Zelle, in der sich dieser Empfänger befindet,
- Mittel zur Bestimmung der Differenz in Sachen Ausbreitungsgeschwindigkeit eines Signals zwischen zum einen diesem bereits identifizierten Satelliten und diese Empfänger und zum anderen jedem der zu identifizierenden Satelliten und diesem Empfänger,
- Mittel zum Vergleichen der absoluten Werte der ermittelten Zeitunterschiede mit den Zeitunterschieden bezogen auf die Positionen der Peaks.

8. Mobile Vorrichtung mit einem Satellitennavigationsempfänger RNSS gemäß dem vorstehenden Anspruch.

Fig. 1

S(t)

| 41 | | 10 |

TF4

| 11 | RS1 | 21 | CD1 | 31 | TF1

61

| 12 | RS2 | 22 | CD2 | 32 | TF2

Σ

P | 51 |

| 13 | RS3 | 23 | CD3 | 33 | TF3

71

F(t)

**Fig. 2**

F

P1

P2

P3

t1   t2   t3

t

**Fig. 3**

**EP 1 692 535 B1**

**RÉFÉRENCES CITÉES DANS LA DESCRIPTION**

**Documents brevets cités dans la description**

- US 4998111 A